# EUROPÄISCHE PATENTSCHRIFT

(11) **EP 2 068 131 B1**
(45) Veröffentlichungstag und Bekanntmachung des Hinweises auf die Patenterteilung: **19.03.2014**
(21) Anmeldenummer: 08021030.5
(22) Anmeldetag: 04.12.2008
(51) Int. Cl.: G01F 1/26, G01F 1/28, F16K 37/00, F16K 1/54

(54) **Vorrichtung zum Anzeigen und Regulieren der Durchflussmenge in einem Fluidkreislauf einer Wärme- oder Kälteversorgungsanlage**
Apparatus for regulating and measuring the flowrate in a fluid circuit of a heat or cold supplying system
Appareil pour afficher et régler le débit dans un circuit de liquide d'une installation d'alimentation en chaleur ou en froid

(30) Priorität: 05.12.2007 DE 202007016961 U
(43) Veröffentlichungstag der Anmeldung: 10.06.2009
(73) Patentinhaber: Watts Industries Deutschland Gesellschaft mit beschränkter Haftung, 76829 Landau (DE)
(72) Erfinder: Spiess, Fritz, 8918 Unterlunkhofen (CH)
(74) Vertreter: Patentanwälte Dr. Keller, Schwertfeger

(56) Entgegenhaltungen:
- EP-A- 0 949 486
- EP-A- 1 201 978
- DE-A1- 2 048 344
- DE-C- 849 207
- DE-U1-202005 017 577

## Beschreibung

Die Erfindung betrifft Vorrichtungen zum Anzeigen und Regulieren der Durchflussmenge in einem Fluidkreislauf einer Wärme- oder Kälteversorgungsanlage gemäß dem Oberbegriff des Anspruchs 1.

Eine derartige Vorrichtung ist bekannt aus der EP 0 949 486 A2. Diese Schrift offenbart ein Zwei-Wege-Ventil zum Regulieren und Messen der Durchflussrate eines Fluids mit einen Kopf und einem Abzweig innerhalb des Kopfs. Die Messvorrichtung besteht aus einem Anzeigestößel mit einem Teller, die von der Fluidströmung gegen die Kraft einer Feder mehr oder weniger weit ausgelenkt werden. Zum Verschließen der Öffnung des Abzweigs ist eine Verschlussvorrichtung vorgesehen in Form eines Zylinders oder Konus, in dessen Außenfläche keilförmige Vertiefungen eingeformt sind. Diese Vertiefungen ermöglichen eine feinstufige Drosselung der Fluidströmung. Gleichzeitig glätten sie die Fluidströmung, um zu verhindern, dass der Anzeigestößel infolge von durch die Drosselung ausgelösten Turbulenzen zu stark vibriert.

Eine weitere Vorrichtung ist bekannt aus der DE 20 2005 017 577 U. Die in dieser Schrift offenbarte Vorrichtung besitzt ein Anzeigeteil und ein Messteil sowie ein Regelorgan, wobei das Anzeigeteil ein in einem Führungsteil gehaltenes rohrförmiges Schauglas umfasst, das zugleich als Betätigungselement für das Regelorgan dient und in dessen Bohrung ein in das Messrohr des Messteils hineinreichender Anzeigestößel längsbeweglich geführt ist. Die Bohrung des Schauglases ist an seinem dem Messteil zugewandten unteren Ende sacklochartig erweitert. In dieser Erweiterung ist ein Ventilkopf aus einem elastischen Material wie Gummi, Kunststoff oder dergleichen eingesetzt. Der Ventilkopf wirkt mit seiner freien Stirnfläche unmittelbar gegen den an der Stirnseite des Messrohrs gebildeten Ventilsitz.

Der Ventilkopf besitzt einen zentralen, kegelstumpfartigen Ansatz, der längsverlaufende Rippen aufweisen kann, wobei diese Rippen konkav gekrümmt verlaufen können. Dies ermöglicht die feine Justierung der Durchflussmenge.

Der Ventilkopf weist eine axiale Bohrung auf, in der der Anzeigestößel geführt ist. Dabei kann diese Bohrung nur über einen Teil ihrer Länge als Führung ausgebildet sein. In diesem Fall ist die Bohrung im Anschluss an den zylindrischen Teil zu einem polygonalen, insbesondere quadratischen Querschnitt erweitert.

Es hat sich herausgestellt, dass sich in dem Spalt zwischen Ventilkopf und Stößel organische und anorganische Materialien ablagern. Dadurch kann sich der Anzeigestößel nicht mehr frei bewegen, so dass die angezeigte Durchflussmenge mit der tatsächlichen Durchflussmenge nicht mehr übereinstimmt, was zu Fehljustierungen durch den Installateur führt. Das ist unbefriedigend.

Der vorliegenden Erfindung liegt die Aufgabe zugrunde, die bekannten Vorrichtungen derart zu verbessern, dass Ablagerungen wenn nicht vermieden, so doch deutlich reduziert werden.

Diese Aufgabe wird gelöst durch die Vorrichtungen mit den Merkmalen des Anspruchs 1.

Dank der bis zum Anzeigestößel reichenden Schlitze im Regulierkonus reinigt das aufgrund der erhöhten Strömungsgeschwindigkeit turbulente Fluid bevorzugt den Spalt zwischen dem Ventilkopf und Anzeigestößel, so dass dieser frei beweglich bleibt. Die feine Regulierung der Durchflussmenge bleibt bei richtiger Ausgestaltung von Ventilkopf und Ventilsitz erhalten.

Gemäß einer vorteilhaften Ausgestaltung der Erfindung besteht der Formkörper aus Gummi.

Vorteilhafterweise besteht der Regulierkonus aus einem harten Kunststoff.

Anhand der Zeichnung soll die Erfindung in Form des Ausführungsbeispiels näher erläutert werden. Es zeigen
- Fig. 1: eine Vorrichtung zum Anzeigen und Regulieren der Durchflussmenge in einem Fluidkreislauf als Seitenansicht,
- Fig. 2: ein Längsschnitt entlang der Linie II-II durch die Vorrichtung der Fig. 1 und
- Fig. 3: eine perspektivische Ansicht eines Ventilkopfs und eines Formkörpers.

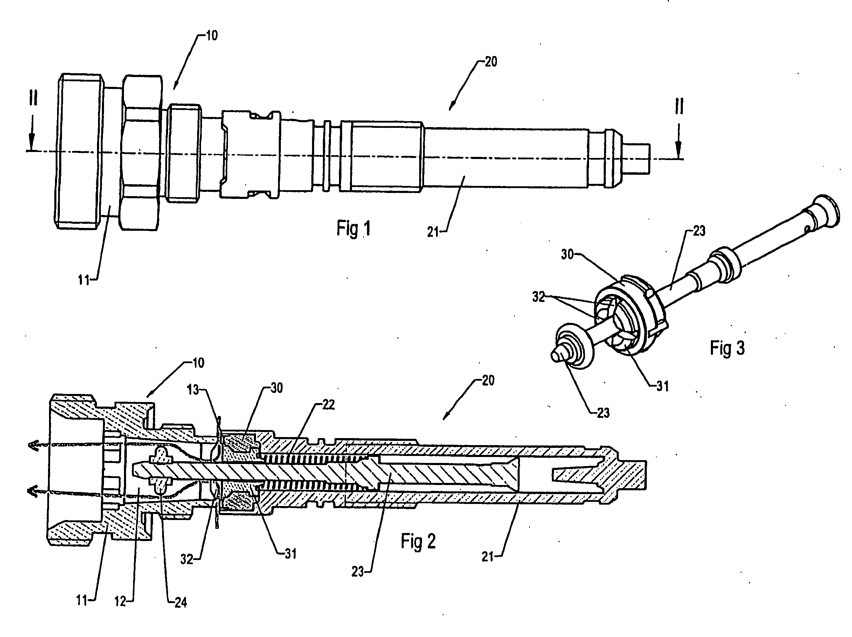

Fig. 1 als Seitenansicht und Fig. 2 als Längsschnitt entlang der Linie II-II zeigen eine Vorrichtung zum Anzeigen und Regulieren der Durchflussmenge in einem Fluidkreislauf einer Wärme- oder Kälteversorgungsanlage. Man erkennt ein Gehäuse 10 mit einem Ventilunterteil 11, einer konischen Bohrung 12 und einem Dichtsitz 13. Man erkennt des weiteren ein Anzeigeteil 20 mit einem hohlzylindrischen Schauglas 21 mit einem geschlossenen Ende und einem offenen Ende und einem darin axial beweglichen, mittels Feder 22 belasteten Anzeigestößel 23.

Fig. 2 zeigt des weiteren einen am offenen Ende des Schauglases 21 mit Hilfe eines elastischen Formkörpers 30 befestigten Regulierkonus 31. Das freie Ende des Anzeigestößels 23 ist durch den Regulierkonus 31 hindurch geführt und trägt einen in die konische Bohrung 12 eintauchenden Strömungskörper 24.

Wie Fig. 2 im Schnitt und insbesondere Fig. 3 erkennen lassen, besitzt der Regulierkonus 31 am Umfang verteilt Schlitze 32, die bis zum Anzeigestößel 23 reichen. Beim Herunterfahren des Regulierkonus 31 auf den Ventilsitz 13 strömt das Fluid bevorzugt in die Schlitze 32. Dabei entsteht eine schnelle Strömung, die Ablagerungen in dem Spalt zwischen Anzeigestößel 23 und Regulierkonus 31 wegspült. Durch geeignete Ausgestaltung der Schlitze können Menge und Geschwindigkeit der die Reinigung bewirkenden Fluidströmung gezielt gesteuert werden. Dank der Verringerung oder Beseitigung der Ablagerungen bleibt der Anzeigestößel 23 frei beweglich, so dass die angezeigte Durchflussmenge mit der tatsächlichen Durchflussmenge übereinstimmt.

## Patentansprüche

1. Vorrichtung zum Anzeigen und Regulieren der Durchflussmenge in einem Fluidkreislauf einer Wärme- oder Kälteversorgungsanlage, umfassend
- ein Gehäuse (10) mit
- - einem Ventilunterteil (11),
- - einer konischen Bohrung (12)
- - und einem Dichtsitz (13),
- ein Anzeigeteil (20) mit
- - einem hohlzylindrischen Schauglas (21) mit
- - - einem geschlossenen Ende,
- - - einem offenen Ende
- - - und einem darin axial beweglichen, mittels Feder (22) belasteten Anzeigestößel (23)
- und einen am offenen Ende des Schauglases (21) befestigten Regulierkonus (31) mit am Umfang verteilten Schlitzen (32),
- das freie Ende des Anzeigestößels (23)
- - ist durch den Regulierkonus (31) hindurch geführt
- - und trägt einen in die konische Bohrung (22) eintauchenden Strömungskörper (24),
**gekennzeichnet durch** die Merkmale:
- der Regulierkonus (31)
- - ist mit Hilfe eines elastischen Formkörpers (30) am Schauglas (21) befestigt
- - und besteht aus Kunststoff,
- die Schlitze (32) reichen bis zum Anzeigestößel (23), so dass das Fluid aufgrund der erhöhten Strömungsgeschwindigkeit den Spalt zwischen Regulierkonus (31) und Anzeigestößel (23) reinigt.

2. Vorrichtung nach Anspruch 1, **gekennzeichnet durch** das Merkmal:
- der Regulierkonus (31) besteht aus einem harten Kunststoff.

3. Vorrichtung nach Anspruch 1, **gekennzeichnet durch** das Merkmal:
- der Formkörper (30) besteht aus Gummi.

## Claims

1. Device for indicating and regulating the flow rate in a fluid circuit of a heating or cooling system, comprising
- a housing (10) having
- a lower valve part (11),
- a conical bore (12),
- and a sealing seat (13);
- an indicating element (20) having
- a hollow-cylindrical inspection glass (21) having
- a closed end,
- an open end,
- and an indicator plunger (23) axially movable therein and stressed by a spring (22)
- and a regulating cone (31) which is attached to the open end of the inspection glass (21) and has slots (32) distributed around the circumference,
- the free end of the indicator plunger (23)
- is guided through the regulating cone (31)
- and supports a flow body (24) immersed in the conical bore (22),
**characterised by** the features:
- the regulating cone (31)
- is attached to the inspection glass (21) by means of a resilient moulded body (30)
- and consists of plastics material,
- the slots (32) extend as far as the indicator plunger (23) such that the liquid cleans the gap between the regulating cone (31) and the indicator plunger (23) owing to the increased flow rate.

2. Device according to claim 1, **characterised by** the feature:
- the regulating cone (31) consists of a hard plastics material.

3. Device according to claim 1, **characterised by** the feature:
- the moulded body (30) consists of rubber.

## Revendications

1. Dispositif pour afficher et réguler le débit dans un circuit de fluide d'une installation calorifique ou frigorifique, comprenant
- un boîtier (10) avec
- - une partie inférieure de vanne (11),
- - un alésage conique (12)
- - et un siège d'étanchéité (13),
- une partie d'affichage (20) avec
- - un verre-regard cylindrique creux (21) présentant
- - - une extrémité fermée,
- - - une extrémité ouverte
- - - et un coulisseau indicateur (23) mobile axialement dans celui-ci, sollicité au moyen d'un ressort (22)
- et un cône de régulation (31) fixé à l'extrémité ouverte du verre-regard (21), présentant des fentes (32) réparties sur la périphérie,
- l'extrémité libre du coulisseau indicateur (23)
- - passant à travers le cône de régulation (31)
- - et portant un corps d'écoulement (24) plongeant dans l'alésage conique (12),
**caractérisé en ce que**
- le cône de régulation (31)
- - est fixé au verre-regard (21) à l'aide d'un corps moulé élastique (30)
- - et est composé d'une matière plastique,
- les fentes (32) s'étendent jusqu'au coulisseau indicateur (23), de sorte que le fluide nettoie l'interstice entre cône de régulation (31) et coulisseau indicateur (23) en raison de la vitesse d'écoulement plus élevée.

2. Dispositif selon la revendication 1, **caractérisé en ce que**
- le cône de régulation (31) est composé d'une matière plastique dure.

3. Dispositif selon la revendication 1, **caractérisé en ce que**
- le corps moulé (30) est composé de caoutchouc.
